# EUROPEAN PATENT APPLICATION

(11) **EP 4 851 750 A1**
(43) Date of publication of application: **09.12.2026**
(21) Application number: 26167393.3
(22) Date of filing: 24.03.2026
(51) Int. Cl.: G06F 1/324, G06F 1/3225, G06F 1/3234, G06F 9/28, G06F 9/50, G06F 11/34

(54) **AUTOMATIC DYNAMIC VOLTAGE FREQUENCY SCALING (DVFS) FOR ARTIFICIAL INTELLIGENCE (AI) ACCELERATOR**

(30) Priority: 05.06.2025 US 202563818088 P; 16.01.2026 US 202619451785
(71) Applicant: MediaTek Inc., Hsinchu City 30078 (TW)
(72) Inventor: WANG, Shih-Chieh, 30078 Hsinchu City (TW)
(74) Representative: Haseltine Lake Kempner LLP

(57) **Abstract**

A system dynamically manages the power of an AI accelerator having multiple cores. Each core includes a core dynamic voltage frequency scaling (DVFS) controller and a set of hardware components for performing a task using an AI model. Each core DVFS controller is operative to receive a core power budget for the core, calculate a power index by summing a weighted usage count of each hardware component, calculate a first difference between the core power budget and the power index; identify execution time of each pipeline stage for executing the task; calculate a second set of differences between different stages of the pipeline stages; and adjust at least one of a core clock rate and a bus clock rate based on the first difference and the second set of differences.

## Description

### CROSS-REFERENCE TO RELATED APPLICATIONS

This application claims the benefit of U.S. Provisional Application No. 63/818,088 filed on June 5, 2025 the entirety of which is incorporated by reference herein.

### TECHNICAL FIELD

Embodiments of the invention relate to power and performance management for an AI accelerator.

### BACKGROUND OF THE INVENTION

Modern computing devices include specialized processors such as artificial intelligence (AI) accelerators to perform AI operations. In some systems, an AI accelerator is also known as an AI processing unit (APU) or a neural processing unit (NPU). An AI accelerator is designed to accelerate AI and machine learning tasks by efficiently executing the mathematical operations required for tasks such as image recognition, natural language processing, predictive modeling, to name a few.

Conventional systems may provide a fixed set of power and performance modes, with each mode at a pre-defined frequency and voltage setting. As a result, the conventional systems have little flexibility as to the selection of clock frequency operating points. An AI accelerator's performance and power demand can fluctuate with workload over a wide range, and, therefore, the pre-defined settings may not be able to dynamically balance the performance and power of the system. Therefore, there is a need for an effective method for managing power and performance of an AI accelerator during runtime.

### SUMMARY OF THE INVENTION

In one embodiment, a method is provided for dynamically managing power of an AI accelerator having a plurality of cores. The method comprises receiving a core power budget for a core of the AI accelerator, the core including a set of hardware components for performing a task using an AI model. The method further comprises calculating a power index by summing a weighted usage count of each hardware component; calculating a first difference between the core power budget and the power index;midentifying execution time of each of a plurality of pipeline stages for executing the task; calculating a second set of differences between different stages of the pipeline stages; and adjusting at least one of a core clock rate and a bus clock rate based on the first difference and the second set of differences.

In another embodiment, a system is operative to manage power dynamically. The system comprises an AI accelerator having a plurality of cores. Each core includes a core dynamic voltage frequency scaling (DVFS) controller and a set of hardware components for performing a task using an AI model. The core DVFS controller is operative to: receive a core power budget for the core; calculate a power index by summing a weighted usage count of each hardware component; calculate a first difference between the core power budget and the power index; identify execution time of each of a plurality of pipeline stages for executing the task; calculate a second set of differences between different stages of the pipeline stages; and adjust at least one of a core clock rate and a bus clock rate based on the first difference and the second set of differences.

Other aspects and features will become apparent to those ordinarily skilled in the art upon review of the following description of specific embodiments in conjunction with the accompanying figures.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
FIG. 1 is a block diagram illustrating a system including a multi-core AI accelerator according to one embodiment.
FIG. 2 is a block diagram illustrating an example of a core in the AI accelerator according to one embodiment.
FIG. 3 is a diagram illustrating pipeline stages of AI model execution performed by a core according to one embodiment.
FIG. 4 is a flow diagram illustrating a process performed by a core DVFS controller according to one embodiment.
FIG. 5 illustrates an example of a job including three functions according to one embodiment.
FIG. 6 is a flow diagram illustrating a process performed by a central DVFS controller according to one embodiment.
FIG. 7 is a flow diagram illustrating a process for block size optimization according to one embodiment.
FIG. 8 is a block diagram illustrating components for determining a multi-core power budget according to one embodiment.
FIG. 9 is a flow diagram illustrating a method for dynamically managing power of an AI accelerator according to one embodiment.

### DETAILED DESCRIPTION OF THE INVENTION

In the following description, numerous specific details are set forth. However, it is understood that embodiments of the invention may be practiced without these specific details. In other instances, well-known circuits, structures, and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

This disclosure describes a multi-core AI accelerator that performs dynamic voltage and frequency scaling (DVFS) in each core. Each core generates a power index, a job completion ratio, and pipeline stage execution time during execution of one or more AI models. The power index indicates power usage and is calculated from weighted usage counts of respective hardware components in each core. The job completion ratio indicates whether to speed up or slow down a core. The execution time of each pipeline stage can be used to determine whether a core is computing bound, bandwidth bound, or a combination of both. A core DVFS controller may dynamically manage the power of a core based on one or more of the power index, the JCR, and the pipeline stage execution time. A central DVFS controller may manage the power budget allocated to each core.

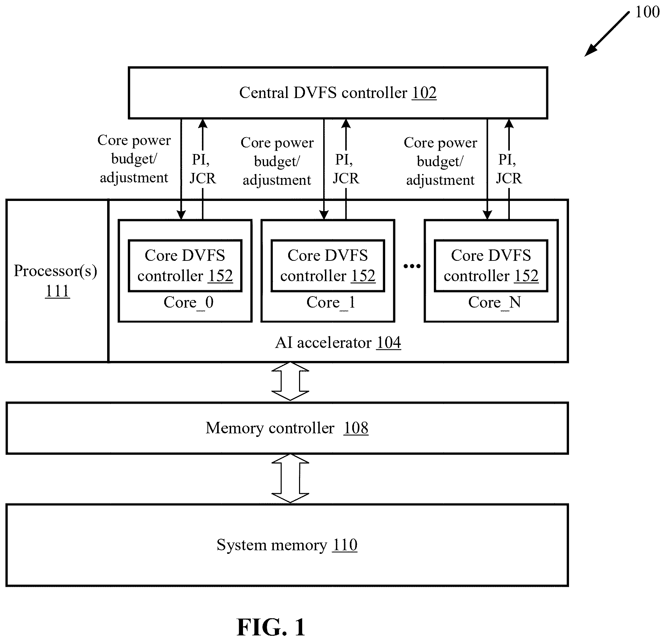

FIG. 1 is a block diagram illustrating a system 100 including a multi-core AI accelerator 104 according to one embodiment. The system 100 includes processors 111 and system memory 110 coupled to the AI accelerator 104. The system 100 further includes a central DVFS controller 102 to manage power and performance of the AI accelerator 104, and a memory controller 108 to control access to the system memory 110. In one embodiment, the central DVFS controller 102 manages the power budget allocated to each core of the AI accelerator 104.

In one embodiment, the system 100 may be an edge device, which is an electronic device at an end point of a network at a user's side. Non-limiting examples of an edge device include a smartphone, an autonomous vehicle, an Internet-of-things (IoT) device, a desktop/laptop computer, a wearable device, etc. The processors 111 include general-purpose processors and special-purpose processing circuits. In some embodiments, the processors 111 may include a central processing unit (CPU), a digital signal processor (DSP), a graphics processing unit (GPU), etc. The system memory 110 may include memory devices such as dynamic random access memory (DRAM), static RAM (SRAM), a flash memory device, and/or other volatile or non-volatile memory devices. Although the system memory 110 is represented by one block in FIG. 1, it is understood that the system memory 110 may include multiple memory devices across multiple levels of memory hierarchy. It is understood that the system 100 is simplified for illustration; additional hardware and software components are not shown.

In one embodiment, the AI accelerator 104 includes N cores (e.g., core_0, core_1, ..., core_N, where N > 1), and each core includes a core DVFS controller 152 coupled to the central DVFS controller 102. Each core is also coupled to the memory controller 108 to access to the system memory 110. Each core DVFS controller 152 provides the central DVFS controller 102 with power and performance indicators of the core, such as a power index (PI) and a job completion ratio (JCR). Each core DVFS controller 152 receives, from the central DVFS controller 102, a core power budget and adjustments to the core power budget. The cores may perform neural network computing, AI computing, machine learning, deep learning, and the like. The computations of the cores may include executing one or more multi-layered neural networks, one or more AI models, machine learning algorithms, etc. The cores may execute different AI models, or the same AI model on different subsets of data (i.e., different regions of an input activation).

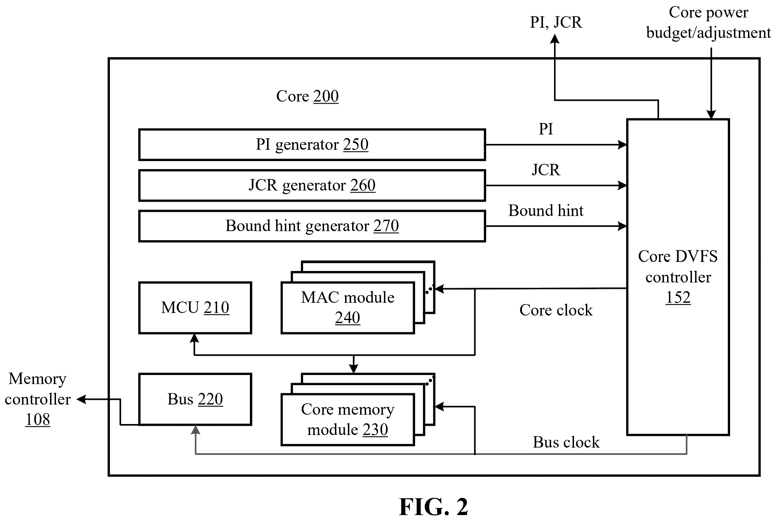

FIG. 2 is a block diagram illustrating an example of a core 200 in the AI accelerator 104 according to one embodiment. Referring also to FIG. 1, the core 200 can be any of the cores (e.g., core_0, core_1, ..., core_N) in FIG. 1. The core 200 includes the core DVFS controller 152 coupled to multiple functional units; non-limiting examples of the functional units include a microcontroller (MCU) 210, a bus 220, core memory modules 230 such as static random-access memory (SRAM) modules, and mathematical calculation circuits such as multiply-accumulate (MAC) modules 240. The MCU 210, the MAC modules 240, and the core memory modules 230 receive a core clock. The bus 220 and the core memory modules 230 receive a bus clock. The bus 220 connects the SRAM modules 230 to the external memory (e.g., the system memory 110 in FIG. 1) via the memory controller 108. The core memory modules 230 connect to both the core clock and the bus clock due to the different speeds and timing requirements of internal processing versus external data movement. The MAC modules 240 are the computational components that enable parallel processing for AI and machine learning workloads.

In one embodiment, the core 200 further includes a power index (PI) generator 250, a job completion ratio (JCR) generator 260, and bound hint generator 270. The PI generator 250 calculates a power index of the core 200 at a fixed time interval or at the completion of executing each input data block. In one embodiment, the power index is the sum of four unit power indices, which indicate the power usage by the MAC modules 240, the SRAM modules 230, the MCU 210, and the bus 220, respectively. The power usage is calculated based on a usage count of each functional unit multiplied by a predetermined weighting factor. The calculations of the four unit power indices are described by the following formulas.

MAC unit power index = Σ(MAC_cnt[i] × MAC _weighting[i][j]), where i identifies an MAC module, j identifies the data type of a data operand (e.g., INT8, INT16, FLOAT8 or FLOAT16, etc.), and "cnt" stands for "count".

Core memory unit power index = Σ(Mem_Rd_cnt[i]) × Mem_Rd_weighting[i]) + Σ(Mem_Wt_cnt[i] × Mem_Wt_weighting[i]), where i identifies a core memory module, "Rd" stands for "read" and "Wt" stands for "write".

MCU unit power index = Σ(INST_cnt[i]) × INST_weighting[i]), where i identifies an instruction (INST).

Bus unit power index = Σ(BW) × BW_weighting, where "BW" stands for "bandwidth".

The PI generator 250 counts the number of MAC operations, the number of core memory reads and writes, the number of executed instructions, and the amount of data transfer (e,g., measured by the number of bytes or another data size unit) on the bus 220 over a time period. Each count is multiplied by a respective weighting factor, which converts the count to power usage. The PI generator 250 calculates the sum of the four unit power indices to generate a power index for the time period in which the counts were collected. The PI generator 250 then sends the power index to the core DVFS controller 152. The core DVFS controller 152 uses the power index to determine a core power margin. More specifically, the core DVFS controller 152 calculates the core power margin (CPM) based on a core power budget provided by the central DVFS controller 102 (FIG. 1) and the power index provided by the PI generator 250. The CPM may be calculated as the core power budget minus the power index. When CPM > 0, the core DVFS controller 152 may increase the core clock rate and/or the bus clock rate to increase performance. When CPM < 0, the core DVFS controller 152 may decrease the core clock rate and/or the bus clock rate to save power. The decision to adjust either one or both of the core clock rate and the bus clock rate may be based on the bound hint generated by the bound hint generator 270.

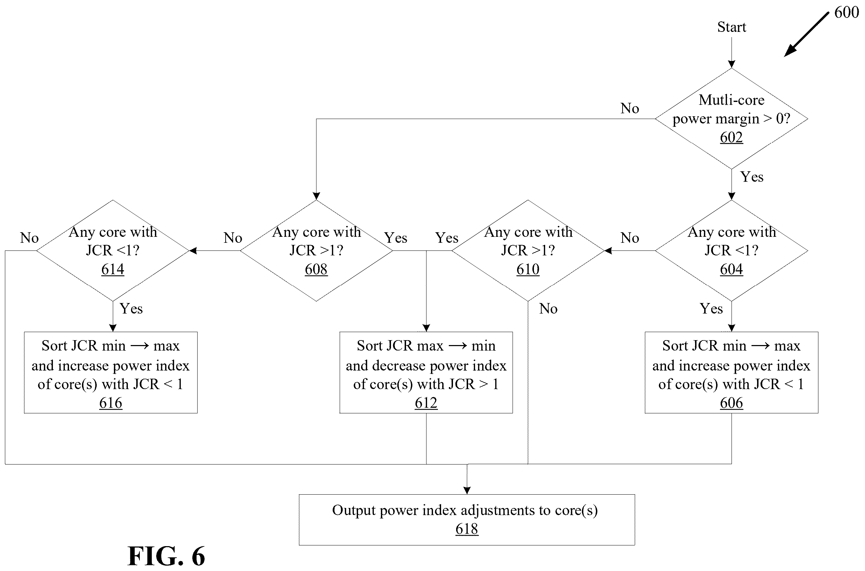

In one embodiment, the core DVFS controller 152 forwards the power index to the central DVFS controller 102, which determines an adjusted power index for the core 200 based on the multi-core power margin and the JCR generated by the JCR generator 260. The determination of the adjusted power index will be described in further detail with reference to FIG. 6.

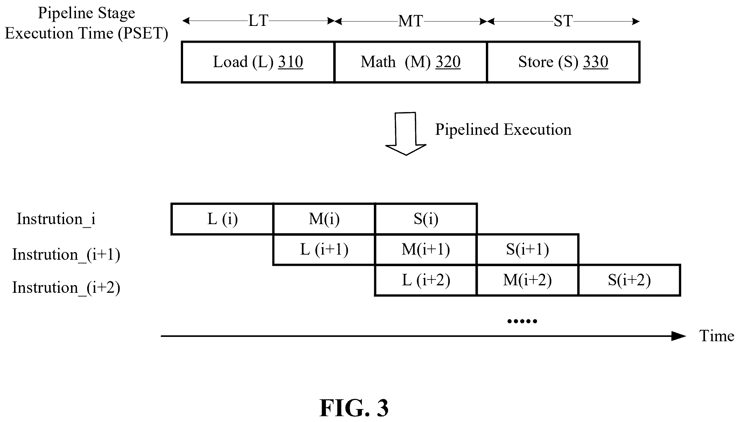

To describe the bound hint, it is helpful to first explain the pipeline stages of AI model execution performed by each core. It is noted that the term "AI models" herein encompass neural networks and various machine learning models. FIG. 3 is a diagram illustrating pipeline stages of AI model execution performed by a core according to one embodiment. In one embodiment, the AI model execution performed by each core 200 include operations performed in three pipeline stages: a load stage 310, a math stage 320, and a store stage 330. Each operation is performed on a data block in the three stages sequentially. Different operations are performed on different data blocks. Different stages of different operations may be performed at the same time in parallel. For example, FIG. 3 shows that the store stage 310 of instruction_i , the math stage 320 of instruction _(i+1) and the load stage 330 of instruction_(i+2) can be executed in parallel. The lengths of execution time of the three pipeline stages are denoted as LT, MT, and ST, where LT represents load time of the load stage 310, MT represents the computation time of the math stage 320, and ST represents the store time of the store stage 330. The factors affecting LT, MT, and ST are external bandwidth, function complexity, and external bandwidth, respectively. The term "external bandwidth" herein refers to the bandwidth of a connection between a core and a memory device outside the core.

Referring also to FIG. 2, based on the LT, MT, and ST, the bound hint generator 270 generates one of four bound hints to indicate whether the core 200 executing AI operations is computing bound, bandwidth bound, mixed bound, or balanced. The bound hint generator 270 measures LT, MT, and ST of each AI instruction over a time period and calculates the average of each of LT, MT, and ST in that time period. In the following formulas, LT, MT, and ST represent the average execution time of the respective pipeline stages. Thresholds (Thr0 to Thr7) are predetermined parameters, which may be configurable.

In one embodiment, the core 200 is computing bound when (MT - LT) > Thr0 and (MT - ST) > Thr1. The core 200 is bandwidth bound when (LT - MT) > Thr2 and (ST - MT) > Thr3. The core 200 is mixed bound when ((MT - LT) > Thr4 and (ST - MT) > Thr5), or ((MT - ST) > Thr6 and (LT - MT)) > Thr7. The core 200 is balanced when MT = max(LT , ST) + Tol, where Tol is a predetermined tolerance value.

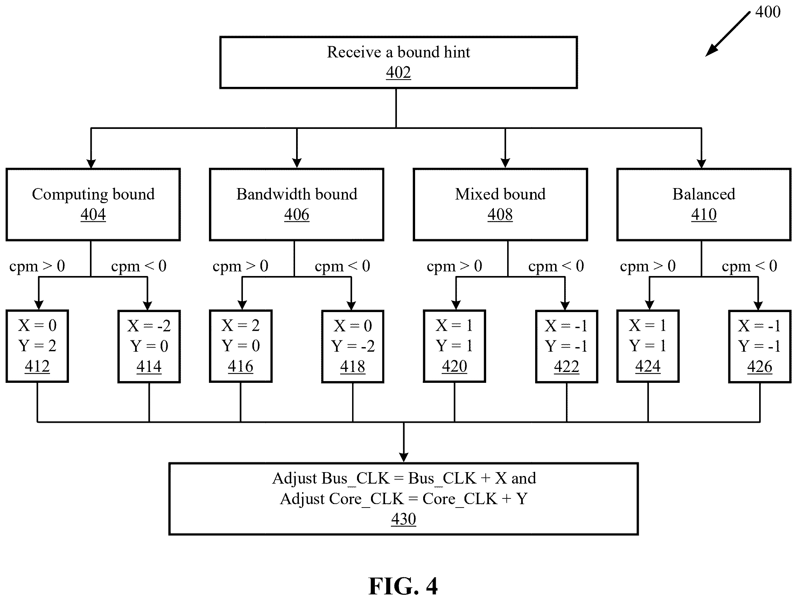

FIG. 4 is a flow diagram illustrating a process 400 performed by the core DVFS controller 152 according to one embodiment. 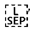 The process 400 starts at step 402, where the core DVFS controller 152 receives a bound hint from the bound hint generator 270. Depending on the bound hint, the process 400 proceeds to step 404, step 406, step 408, or step 410. The steps subsequent to steps 404, 406, 408, and 410 depend on the core power margin (CPM), which is equal to the core power budget (from the central DVFS controller 152) minus the power index (generated by the PI generator 250).

At step 404, the core DVFS controller 152 determines that the core 200 is computing bound. The process 400 then proceeds to step 412 if CPM is greater than zero, or proceed to step 414 if CPM is less than zero.

At step 406, the core DVFS controller 152 determines that the core 200 is bandwidth bound. The process 400 then proceeds to step 416 if CPM is greater than zero, or proceed to step 418 if CPM is less than zero.

At step 408, the core DVFS controller 152 determines that the core 200 is mixed bound, i.e., is both computing bound and bandwidth bound. The process 400 then proceeds to step 420 if CPM is greater than zero, or proceeds to step 422 if CPM is less than zero.

At step 410, the core DVFS controller 152 determines that the core 200 is balanced, i.e., neither computing bound nor bandwidth bound. The process 400 then proceeds to step 424 if CPM is greater than zero, or proceeds to step 426 if CPM is less than zero.

The steps subsequent to step 404, step 406, step 408, and step 410 are dependent on the CPM. When CPM > 0, the core DVFS controller 152 may increase the power of the core 200. When CPM < 0, the core DVFS controller 152 may decrease the power of the core 200. In one embodiment, power increase or decrease may be achieved by increasing or decreasing the core clock rate and/or bus clock rate. The determination of which clock rate to adjust may depend on the bound hint from the bound hint generator 270. For example, if CPM > 0, the bus clock rate may be increased when the core's operations are bandwidth bound, or the core clock rate may be increased when the core's operations are computing bound. If CPM < 0, the core clock rate may be decreased when the core's operations are bandwidth bound, or the bus clock rate may be decreased when the core's operations are computing bound. Furthermore, if CPM > 0, both the core clock rate and the bus clock rate may be increased when the core's operations are mixed bound or balanced. If CPM < 0, both the core clock rate and the bus clock rate may be decreased when the core's operations are mixed bound or balanced.

In one embodiment, each of the core clock rate and the bus clock rate is increased or decreased by a predetermined value. At steps 412-426, the core DVFS controller 152 determines parameters X for bus clock rate and Y for core clock rate based on the bound hint and the CPM. The parameters may be determined as follows: X = 0 and Y = 2 (step 412); X = -2 and Y = 0 (step 414); X = 2 and Y = 0 (step 416); X = 0 and Y = -2 (step 418); X = 1 and Y = 1 (step 420); X = -1 and Y = -1 (step 422); X = 1 and Y = 1 (step 424); or X = -1 and Y = -1 (step 426). The unit of X and the unit of Y may be predetermined. Following any of steps 412-426, the process 400 proceeds to step 430.

At step 430, the core DVFS controller 152 adjusts power to the core 200 by adjusting the core clock rate and/or the bus clock rate. The adjusted bus clock rate = old bus clock rate + X, and the adjusted core clock rate = old core clock rate + Y.

Referring again to FIG. 1, the JCR generator 260 generates the JCR for a job performed by the core 200. A non-limiting example of a job is the execution of an AI model or a layer of a neural network on an input activation. A job may include executing a sequence of functions. A non-limiting example of a function may be a convolution operation. In the description herein, the terms "job" and "task" are used interchangeably.

In one embodiment, the JCR may be calculated as a job ratio divided by a time ratio. The job ratio may be the ratio of completed computations divided by the total computations of the job. The time ratio may be the ratio of the execution time of the completed computations (i.e., the actual execution time) divided by the total expected execution time of the job performed by a core. In one embodiment, the amount of completed computations may be indicated by a score, referred to as an accumulated completion score, and the amount of total computations of the job may be indicated by a total completion score. A job is completed when the accumulated completion score is equal to the total completion score.

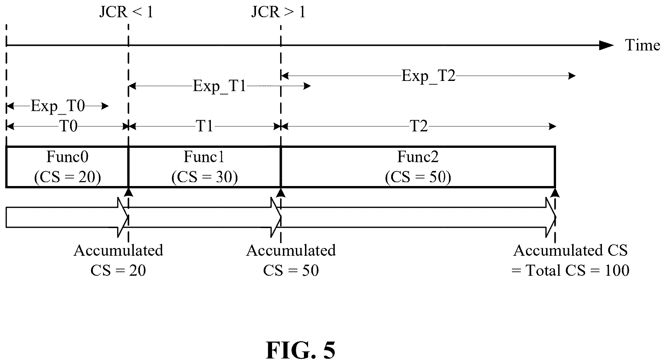

FIG. 5 illustrates an example of a job including three functions (Func0, Func1, Func2) to be sequentially executed by a core (e.g., the core 200 in FIG. 2) according to one embodiment. Each function is assigned a completion score (CS) representing the amount of workload for the core to complete that function. The completion scores may be measured before system deployment. For example, the completion scores assigned to Func0, Func1, and Func2 may be 20, 30, and 50, respectively. In FIG. 5, the accumulated completion scores are shown after each function is completed. For example, the accumulated completion score after completing Func0 is 20, and the accumulated completion scores after completing Func0 and Func1 is 50. The total completion score in this example is 100.

The JCR computation can be applied to multiple cores executing the same functions on different regions of input data in parallel. For example, when two cores execute Func0, Func1, and Func2 on different regions of input data in parallel, the total completion score for each core may be 50, and the completion scores for completing Func0, Func1, and Func2 may be 10, 15, and 25, respectively, for each core.

FIG. 5 also shows the actual execution time T0, T1, and T2 for the core to complete Func0, Func1, and Func2, respectively. The expected execution time Exp_T0, Exp_T1, and Exp_T2 for the core to complete Func0, Func1, and Func2, respectively may be shorter or longer than the actual execution time. For example, the core may take longer to complete Func0 than Exp_T0, which indicates JCR < 1 at the end of Func0. The core may complete Func1 faster than Exp_T1, which indicates JCR > 1 at the end of Func1. As such, the JCR generator 260 may compute JCR = (accumulated completion score/total completion score) × (total expected execution time/actual execution time) during the execution of a job. When a core's JCR > 1, it indicates that the core can slow down. When a core's JCR < 1, it indicates that the core can speed up. Thus, the clock rate (core clock and/or bus clock) can be adjusted during the execution of a job to optimize the core performance. In one embodiment, the clock rate increase may depend on the availability of the core power margin (CPM). In one embodiment, the adjustment to the clock rate may depend on the availability of the multi-core power margin. The multi-core power margin indicates the power margin available to be allocated to one or more cores of the AI accelerator 104 (FIG. 1).

FIG. 6 is a flow diagram illustrating a process 600 performed by the central DVFS controller 102 (FIG. 1) to adjust a core power budget according to one embodiment. In one embodiment, the JCR and the power index of each core are provided to the central DVFS controller 102 for adjusting the core power budget. In one embodiment, the central DVFS controller 102 may notify a core to adjust its power index based on the core's JCR and the multi-core power margin. The adjustment to the power index represents the adjustment to the core power budget. For example, JCR > 1 may indicate that a core is working faster than expected or desired and may be able to slow down. As such, when a core's JCR > 1, the core's power index may be lowered. A lowered power index may be achieved by lowering the core clock rate and/or the bus clock rate, depending on the bound hint mentioned above. When a core's JCR < 1, the core's power index may be increased. An increased power index may be achieved by increasing the core clock rate and/or the bus clock rate, depending on the bound hint mentioned above.

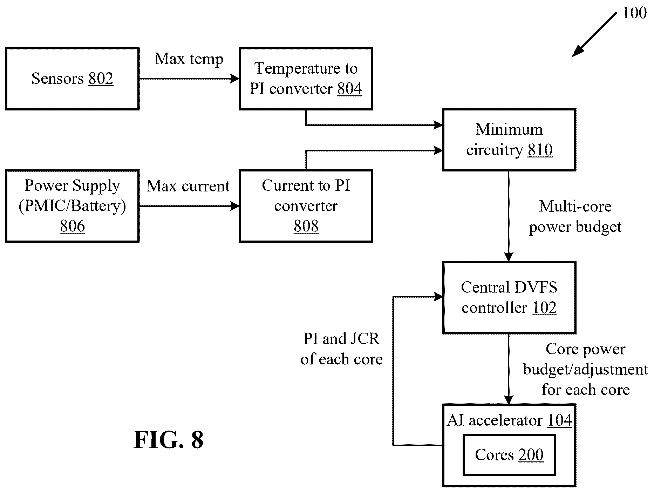

Referring to FIG. 6, the process 600 starts at step 602 where the central DVFS controller 102 determines whether the multi-core power margin is greater than zero. The computation of the multi-core power margin will be described later with reference to FIG. 8. If the multi-core power margin is greater than zero, the process 600 proceeds to step 604. If the multi-core power margin is not greater than zero, the process 600 proceeds to step 608.

At step 604, the central DVFS controller 102 determines whether the AI accelerator 104 includes any core with JCR < 1. If there is any core with JCR < 1, the process 600 proceeds to step 606. If none of the cores has JCR < 1, the process 600 proceeds to step 610.

At step 606, the central DVFS controller 102 sorts the JCRs of all cores from low to high, and increases the power indices of those cores with JCR < 1. The core having the lowest JCR has the highest priority in increasing its power index. The process 600 then proceeds to step 618.

At step 608, the central DVFS controller 102 determines whether the AI accelerator 104 includes any core with JCR > 1. If there is any core with JCR > 1, the process 600 proceeds to step 612. If none of the cores has JCR > 1, the process 600 proceeds to step 614.

At step 610, the central DVFS controller 102 determines whether the AI accelerator 104 includes any core with JCR > 1. If there is any core with JCR > 1, the process 600 then proceeds to step 612. If none of the cores has JCR > 1, the process 600 then proceeds to step 618.

At step 612, the central DVFS controller 102 sorts the JCRs of all cores from high to low, and decreases the power indices of those cores with JCR > 1. The process 600 then proceeds to step 618.

At step 614, the central DVFS controller 102 determines whether the AI accelerator 104 includes any core with JCR < 1. If there is any core with JCR < 1, the process 600 proceeds to step 616. If none of the cores has JCR < 1, the process 600 then proceeds to step 618.

At step 616, the central DVFS controller 102 sorts the JCRs of all cores from low to high, and increases the power indices of those cores with JCR < 1. The process 600 then proceeds to step 618.

At step 618, the central DVFS controller 102 outputs an adjusted power index to one or more cores whose power indices have been adjusted. 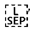 An increase in a core's power index may mean an increase to the core power budget. The core DVFS controller 152 may increase the core's core clock rate and/or the bus clock rate in response to the increase to the core power budget. A decrease in a core's power index may mean a decrease to the core power budget. The core DVFS controller 152 may decrease the core's core clock rate and/or the bus clock rate in response to the decrease to the core power budget.

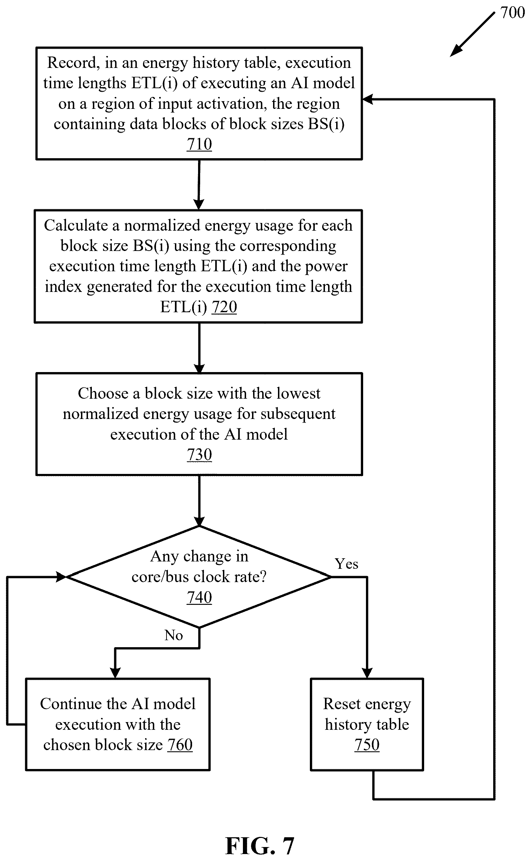

FIG. 7 is a flow diagram illustrating a process 700 for block size optimization according to one embodiment. Accessing data from the system memory 110 (FIG. 1) is significantly slower and more energy-intensive than accessing data from the memory in the core (e.g., the core memory modules 230 in FIG. 2 such as SRAM modules). Dividing input data into blocks (also referred to as tiles) allows each block to fit within the SRAM modules. Thus, accessing data in blocks can reduce the amount of data access to the system memory 110 and save power. For AI applications, the data may be an input activation, which may be a 2-D, 3-D, or multi-dimensional matrix.

In one embodiment, the core DVFS controller 152 may monitor the execution time length of a job or a sub-job (e.g., executing a function, a neural network layer, an AI model, etc.) with different block sizes BS(i). For example, BS(1) = 32 × 32, BS(2) = 32 × 64, BS(3) = 64 × 32, and BS(4) = 64 × 64, and so on.

In one embodiment, the process 700 starts with the core DVFS controller 152 at step 710 recording the execution time length ETL(i) of executing an AI model on a sub-region of an input activation. The execution time length ETL(i) may be recorded in a data structure such as an energy history table stored in the memory inside the core. The sub-region of the input activation may contain multiple blocks of block size BS(i). At step 720, for each block size BS(i), the core DVFS controller 152 first calculates the energy usage, which is equal to the execution time length ETL(i) multiplied by the corresponding power usage (i.e., the power index generated by the PI generator 250 (FIG. 2) for executing the block size BS(i)). The core DVFS controller 152 then normalizes the energy usage by the block size to obtain a normalized energy usage. At step 730, the core DVFS controller 152 chooses the block size with the lowest normalized energy usage for subsequent execution of the AI model.

The energy history table may be constructed during the execution of an AI model. The core clock and the bus clock stay the same when the energy history table is being constructed. If, at step 740, the core clock rate or the bus clock rate changes during the AI model execution after completion of the energy history table, the energy history table is reset (i.e., cleared) at step 750. In some embodiments, the optimal block size in the energy history table may be saved (i.e., not cleared) when the energy history table is reset. The core then returns to step 710 to construct an updated energy history table with the changed clock rate(s). If, at step 740, the core clock rate or the bus clock rate stays the same after completion of the energy history table, the core at step 760 continues the AI model execution using the block size chosen at step 730 until job completion or when one of the clock rates changes at step 740.

FIG. 8 is a block diagram illustrating components for determining a multi-core power budget according to one embodiment. Referring also to FIG. 1, in this embodiment, the central DVFS controller 102 in the system 100 receives a maximum temperature value from a sensor 802 and a maximum current value from a power supply 806 such as a power management integrated circuit (PMIC) or a battery. The maximum temperature value and the maximum current value may be updated from time to time and the values are provided to the system 100 to prevent the system 100 from operating above these values. In some embodiments, the sensor 802 may include a thermal sensor. In some embodiments, the multi-core power budget may be determined based on the maximum temperature value and the maximum current value.

The system 100 further includes a temperature to power index converter circuitry 804, a current to power index converter circuitry 808, and a minimum circuit 810. The temperature to power index circuitry 804 converts the maximum temperature reading over a time period from the sensor 802 to a first power index. The current to power index circuitry 808 converts the maximum current reading over the time period from the power supply 806 to a second power index. The minimum circuitry 810 then determines a minimum of the first power index and the second power index, and outputs that minimum as the maximum power budget (a.k.a. multi-core power budget) for the cores 200. The multi-core power budget represents a maximum amount of power that may be utilized by the cores 200. In one embodiment, the multi-core power margin is calculated as the multi-core power budget minus the sum of power indices generated by the cores 200.

In some embodiments, when the core frequency is adjusted, the core voltage may also be adjusted. In some embodiments, each core may have its respective frequency and voltage adjusted independently. In other embodiments, each core may have its respective frequency adjusted independently, while voltage adjustments may be shared for the cores. In some embodiments, core voltage and frequency updates may be performed according to a DVFS table.

Some embodiments of voltage and frequency determination for multiple cores are described below. For example, each core may have its own DVFS table, with an independent power and clock source. The corresponding frequency value of the clock source may be equal to that of other cores or may be not equal to that of the other cores. Furthermore, the corresponding voltage value of the power source may be equal to that of other cores or not equal to that of other cores.

As another example, each core may have a shared global DVFS table, or each core may have its own DVFS table. In such an arrangement, the cores may have an independent clock source, but shared power sources. The corresponding frequency value of the clock source may be equal to that of other cores or not equal to that of other cores. The corresponding voltage value of the power source may be equal to that of the other cores, because it is a shared power source. In such a configuration, even though the power source is shared, each core may still perform DVFS. In this case, the voltage value may be decided for the power source. For example, one implementation is to maximize each core's voltage value. As merely one example, in a case where there are three cores, a first core may use DVFS level having lower values, e.g., a DVFS "level 3" having a frequency F3 and a voltage V3, a second core may use a DVFS level having intermediate values, e.g., a DVFS "level 5" having a frequency F5 and a voltage V5), and a third core may use a DVFS level having higher values, e.g., a DVFS "level 7" having a frequency F7 and voltage V7. Higher levels have higher frequency and voltage. In this particular case, the frequency result is that the first core uses frequency F3, the second core uses the frequency F5, and the third core uses the frequency F7. In this case, the voltage result is to use the maximum voltage, which here is the maximum of the voltages V3, V5, V7, which is voltage V7.

Other shared voltage values may be used. Using the maximum voltage is merely one exemplary solution where the power source is shared. As described, this maximum voltage solution may use slower frequency to execute jobs, leading to more time to complete jobs, and therefore higher energy utilization but lower power utilization. In some embodiments, another solution is to increase the frequency of the first core and the second core when the higher voltage value (e.g., voltage V7) is selected. This solution may have lower energy utilization but a higher power utilization as jobs are completed in less time. In other embodiments, a lower than maximum voltage may be selected for better energy consumption while having more power impact.

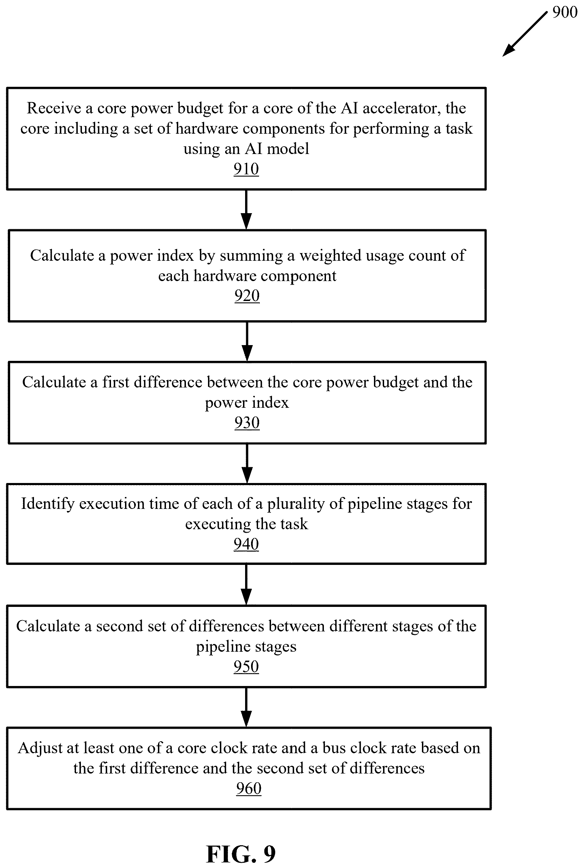

FIG. 9 is a flow diagram illustrating a method 900 for dynamically managing power of an AI accelerator according to one embodiment. The method 900 may be performed by the system 100 of FIG. 1 and FIG. 8, and/or the core 200 of FIG. 2.

In one embodiment, the method 900 begins at step 910 when a core of the AI accelerator receives a core power budget for the core. The core includes a set of hardware components for performing a task using an AI model. At step 920, the core calculates a power index by summing a weighted usage count of each hardware component. At step 930, the core calculates a first difference between the core power budget and the power index. At step 940, the core identifies execution time of each of a plurality of pipeline stages for executing the task. At step 950, the core calculates a second set of differences between different stages of the pipeline stages. At step 960, the core adjusts at least one of a core clock rate and a bus clock rate based on the first difference and the second set of differences.

In one embodiment, the power index is calculated, at least in part, by adding a first weighted count of memory reads and a second weighted count of memory writes during a time period. The memory reads and the memory writes are performed to a memory device internal to the core. The power index is calculated, at least in part, by counting a weighted number of data transfers between the core and a system memory outside the core during the time period. The power index is calculated, at least in part, by counting a weighted number of computations performed by computation circuitry during a time period. Data operands of different types are weighted differently. The power index is calculated, at least in part, by counting a weighted number of instructions issued by a microcontroller during the time period. Different instructions are weighted differently. In one embodiment, the second set of differences indicate whether the core is computing bound, bandwidth bound, a combination of computing bound and bandwidth bound, or balanced.

In one embodiment, a central DVFS controller determines an adjustment to the core power budget based on a multi-core power margin and a job completion ratio (JCR) of the core. The multi-core power margin indicates available power to the cores. In one embodiment, the central DVFS controller may sort the cores according to their respective JCRs during execution of a job. Each JCR is computed based on a first ratio of an accumulated completion score to a total completion score and a second ratio of total expected execution time to actual execution time. The core power budgets of a first set of the cores are increased when a multi-core power margin is positive. Lower-JCR cores are given higher priorities than higher-JCR cores in increasing the core power budgets. The central DVFS controller may further sort the cores according to their respective JCRs during execution of a job. The core power budgets of a second set of the cores are decreased when a multi-core power margin is negative. Higher-JCR cores are given higher priorities than lower-JCR cores in decreasing the core power budgets.

In one embodiment, the core records, in an energy history table, execution time lengths of executing the AI model on an input activation with respective block sizes. The core calculates a normalized energy usage for the respective block sizes using the power index and the execution time lengths. The core then chooses a block size with a lowest normalized energy result for subsequent execution of the AI model. In one embodiment, the energy history table is reset when at least one of the core clock rate and the bus clock rate changes.

In one embodiment, a maximum temperature reading and a maximum current reading over a time period are obtained. A first power value is determined from the maximum temperature reading and a second power value is determined from the maximum current reading. The power budget for the cores are the minimum of the first power value and the second power value.

The operations of the flow diagrams of FIG. 4, FIG. 6, FIG. 7, and FIG. 9 have been described with reference to the exemplary embodiments of FIG. 1, FIG. 2, and FIG. 8. However, it should be understood that the operations of the flow diagrams of FIG. 4, FIG. 6, FIG. 7, and FIG. 9 can be performed by embodiments of the invention other than the embodiments of FIG. 1, FIG. 2, and FIG. 8, and the embodiments of FIG. 1, FIG. 2, and FIG. 8 can perform operations different than those discussed with reference to the flow diagrams. It is understood that the order of operations shown in the flow diagrams of FIG. 4, FIG. 6, FIG. 7, and FIG. 9 is a non-limiting example. Alternative embodiments may perform the operations in a different order, combine certain operations, overlap certain operations, etc.

Various functional components or blocks have been described herein. As will be appreciated by persons skilled in the art, the functional blocks will preferably be implemented through circuits (either dedicated circuits or general-purpose circuits, which operate under the control of one or more processors and coded instructions), which will typically comprise transistors that are configured in such a way as to control the operation of the circuitry in accordance with the functions and operations described herein.

While the invention has been described in terms of several embodiments, those skilled in the art will recognize that the invention is not limited to the embodiments described, and can be practiced with modification and alteration within the spirit and scope of the appended claims. The description is thus to be regarded as illustrative instead of limiting.

Embodiments of the invention are set out in the following numbered clauses:
1. A method for dynamically managing power of an artificial intelligence (AI) accelerator having a plurality of cores, comprising:receiving a core power budget for a core of the AI accelerator, the core including a set of hardware components for performing a task using an AI model; calculating a power index by summing a weighted usage count of each hardware component; calculating a first difference between the core power budget and the power index; identifying execution time of each of a plurality of pipeline stages for executing the task; calculating a second set of differences between different stages of the pipeline stages; and adjusting at least one of a core clock rate and a bus clock rate based on the first difference and the second set of differences.
2. The method of clause 1, wherein calculating the power index further comprises: adding a first weighted count of memory reads and a second weighted count of memory writes during a time period, wherein the memory reads and the memory writes are performed to a memory device internal to the core; and counting a weighted number of data transfers between the core and a system memory outside the core during the time period.
3. The method of clause 1, wherein calculating the power index further comprises: counting a weighted number of computations performed by computation circuitry during a time period, wherein data operands of different types are weighted differently; and counting a weighted number of instructions issued by a microcontroller during the time period, wherein different instructions are weighted differently.
4. The method of clause 1, wherein the second set of differences indicate whether the core is computing bound, bandwidth bound, a combination of computing bound and bandwidth bound, or balanced.
5. The method of clause 1, further comprising: determining an adjustment to the core power budget based on a multi-core power margin and a job completion ratio (JCR) of the core, wherein the multi-core power margin indicates available power to the plurality of cores.
6. The method of clause 1, further comprising: sorting the plurality of cores according to respective job completion ratios (JCRs) during execution of a job, wherein each JCR is computed based on a first ratio of an accumulated completion score to a total completion score and a second ratio of total expected execution time to actual execution time; and increasing core power budgets of a first set of the cores when a multi-core power margin is positive, wherein lower-JCR cores are given higher priorities than higher-JCR cores in increasing the core power budgets.
7. The method of clause 1, further comprising: sorting the plurality of cores according to respective job completion ratios (JCRs) during execution of a job, wherein each JCR is computed based on a first ratio of an accumulated completion score to a total completion score and a second ratio of total expected execution time to actual execution time; and decreasing the core power budgets of a second set of the cores when a multi-core power margin is negative, wherein higher-JCR cores are given higher priorities than lower-JCR cores in decreasing the core power budgets.
8. The method of clause 1, further comprising: recording, in an energy history table, execution time lengths of executing the AI model on an input activation with respective block sizes; calculating a normalized energy usage for the respective block sizes using the power index and the execution time lengths; and choosing a block size with a lowest normalized energy result for subsequent execution of the AI model.
9. The method of clause 8, further comprising: resetting the energy history table when at least one of the core clock rate and the bus clock rate changes.
10. The method of clause 1, further comprising: obtaining a maximum temperature reading and a maximum current reading over a time period; determining a first power value from the maximum temperature reading and a second power value from the maximum current reading; and outputting a minimum of the first power value and the second power value as a power budget for the plurality of cores.
11. A system operative to manage power dynamically, comprising: an artificial intelligence (AI) accelerator having a plurality of cores, wherein each core includes a core dynamic voltage frequency scaling (DVFS) controller and a set of hardware components for performing a task using an AI model, the core DVFS controller operative to: receive a core power budget for the core; calculate a power index by summing a weighted usage count of each hardware component; calculate a first difference between the core power budget and the power index; identify xecution time of each of a plurality of pipeline stages for executing the task; calculate a second set of differences between different stages of the pipeline stages; and adjust at least one of a core clock rate and a bus clock rate based on the first difference and the second set of differences.
12. The system of clause 11, wherein the core DVFS controller when calculating the power index is further operative to: add a first weighted count of memory reads and a second weighted count of memory writes during a time period, wherein the memory reads and the memory writes are performed to a memory device internal to the core; and count a weighted number of data transfers between the core and a system memory outside the core during the time period.
13. The system of clause 11, wherein the core DVFS controller when calculating the power index is further operative to: count a weighted number of computations performed by computation circuitry during a time period, wherein data operands of different types are weighted differently; and count a weighted number of instructions issued by a microcontroller during the time period, wherein different instructions are weighted differently.
14. The system of clause 11, wherein the second set of differences indicate whether the core is computing bound, bandwidth bound, a combination of computing bound and bandwidth bound, or balanced.
15. The system of clause 11, wherein the system further includes a central DVFS controller coupled to the core DVFS controller in each core, the central DVFS controller is operative to: determine an adjustment to the core power budget based on a multi-core power margin and a job completion ratio (JCR) of the core, wherein the multi-core power margin indicates available power to the plurality of cores.
16. The system of clause 15, wherein the central DVFS controller is further operative to: sort the plurality of cores according to respective job completion ratios (JCRs) during execution of a job, wherein each JCR is computed based on a first ratio of an accumulated completion score to a total completion score and a second ratio of total expected execution time to actual execution time; and increase core power budgets of a first set of the cores when a multi-core power margin is positive, wherein lower-JCR cores are given higher priorities than higher-JCR cores in increasing the core power budgets.
17. The system of clause 15, wherein the central DVFS controller is further operative to: sort the plurality of cores according to respective job completion ratios (JCRs) during execution of a job, wherein each JCR is computed based on a first ratio of an accumulated completion score to a total completion score and a second ratio of total expected execution time to actual execution time; and decrease the core power budgets of a second set of the cores when a multi-core power margin is negative, wherein higher-JCR cores are given higher priorities than lower-JCR cores in decreasing the core power budgets.
18. The system of clause 15, wherein the central DVFS controller is further operative to record, in an energy history table, execution time lengths of executing the AI model on an input activation with respective block sizes; calculate a normalized energy usage for the respective block sizes using the power index and the execution time lengths; and choose a block size with a lowest normalized energy result for subsequent execution of the AI model.
19. The system of clause 18, wherein the central DVFS controller is further operative to: reset the energy history table when at least one of the core clock rate and the bus clock rate changes.
20. The system of clause 11, further comprising: a first converter to convert a maximum temperature reading to a first power value; a second converter to convert a maximum current reading to a second power value; a minimum circuit to output a minimum of the first power value and the second power value as a power budget for the plurality of cores.

## Claims

1. A method (700, 900) for dynamically managing power of an artificial intelligence, AI, accelerator (104) having a plurality of cores (200), comprising:
receiving (910) a core (200) power budget for a core (200) of the AI accelerator (104), the core (200) including a set of hardware components for performing a task using an AI model;
calculating (920) a power index by summing a weighted usage count of each hardware component;
calculating (930) a first difference between the core (200) power budget and the power index;
identifying (940) execution time of each of a plurality of pipeline stages for executing the task;
calculating (950) a second set of differences between different stages of the pipeline stages; and
adjusting (960) at least one of a core (200) clock rate and a bus (220) clock rate based on the first difference and the second set of differences.

2. The method (700, 900) of claim 1, wherein calculating the power index further comprises:
adding a first weighted count of memory reads and a second weighted count of memory writes during a time period, wherein the memory reads and the memory writes are performed to a memory device internal to the core (200); and
counting a weighted number of data transfers between the core (200) and a system memory (110) outside the core (200) during the time period.

3. The method (700, 900) of claim 1, wherein calculating the power index further comprises:
counting a weighted number of computations performed by computation circuitry during a time period, wherein data operands of different types are weighted differently; and
counting a weighted number of instructions issued by a microcontroller during the time period, wherein different instructions are weighted differently.

4. The method (700, 900) of claim 1, further comprising:
determining an adjustment to the core (200) power budget based on a multi-core (200) power margin and a job completion ratio, JCR, of the core (200), wherein the multi-core (200) power margin indicates available power to the plurality of cores (200).

5. The method (700, 900) of claim 1, further comprising:
sorting the plurality of cores (200) according to respective job completion ratios, JCRs, during execution of a job, wherein each JCR is computed based on a first ratio of an accumulated completion score to a total completion score and a second ratio of total expected execution time to actual execution time; and
increasing core (200) power budgets of a first set of the cores (200) when a multi-core (200) power margin is positive, wherein lower-JCR cores (200) are given higher priorities than higher-JCR cores (200) in increasing the core (200) power budgets; or
sorting the plurality of cores (200) according to respective job completion ratios, JCRs, during execution of a job, wherein each JCR is computed based on a first ratio of an accumulated completion score to a total completion score and a second ratio of total expected execution time to actual execution time; and
decreasing the core (200) power budgets of a second set of the cores (200) when a multi-core (200) power margin is negative, wherein higher-JCR cores (200) are given higher priorities than lower-JCR cores (200) in decreasing the core (200) power budgets.

6. The method (700, 900) of claim 1, further comprising:
recording (710) , in an energy history table, execution time lengths of executing the AI model on an input activation with respective block sizes;
calculating (720) a normalized energy usage for the respective block sizes using the power index and the execution time lengths; and
choosing (730) a block size with a lowest normalized energy result for subsequent execution of the AI model.

7. The method (900) of claim 1, further comprising:
obtaining a maximum temperature reading and a maximum current reading over a time period;
determining a first power value from the maximum temperature reading and a second power value from the maximum current reading; and
outputting a minimum of the first power value and the second power value as a power budget for the plurality of cores (200).

8. A system (100) operative to manage power dynamically, comprising:
an artificial intelligence, AI, accelerator (104) having a plurality of cores (200), wherein each core (200) includes a core (200) dynamic voltage frequency scaling, DVFS, controller and a set of hardware components for performing a task using an AI model, the core DVFS controller (152) operative to:
receive a core (200) power budget for the core (200);
calculate a power index by summing a weighted usage count of each hardware component;
calculate a first difference between the core (200) power budget and the power index;
identify execution time of each of a plurality of pipeline stages for executing the task;
calculate a second set of differences between different stages of the pipeline stages; and
adjust at least one of a core (200) clock rate and a bus (220) clock rate based on the first difference and the second set of differences.

9. The system (100) of claim 8, wherein the core DVFS controller (152) when calculating the power index is further operative to:
add a first weighted count of memory reads and a second weighted count of memory writes during a time period, wherein the memory reads and the memory writes are performed to a memory device internal to the core (200); and
count a weighted number of data transfers between the core (200) and a system memory (110) outside the core (200) during the time period.

10. The system (100) of claim 8, wherein the core DVFS controller (152) when calculating the power index is further operative to:
count a weighted number of computations performed by computation circuitry during a time period, wherein data operands of different types are weighted differently; and
count a weighted number of instructions issued by a microcontroller during the time period, wherein different instructions are weighted differently.

11. The system (100) of claim 8, wherein the system (100) further includes a central DVFS controller (102) coupled to the core DVFS controller (152) in each core (200), the central DVFS controller (102) is operative to:
determine an adjustment to the core (200) power budget based on a multi-core (200) power margin and a job completion ratio, JCR, of the core (200), wherein the multi-core (200) power margin indicates available power to the plurality of cores (200).

12. The system (100) of claim 11, wherein the central DVFS controller (102) is further operative to:
sort the plurality of cores (200) according to respective job completion ratios (JCRs) during execution of a job, wherein each JCR is computed based on a first ratio of an accumulated completion score to a total completion score and a second ratio of total expected execution time to actual execution time; and
increase core (200) power budgets of a first set of the cores (200) when a multi-core (200) power margin is positive, wherein lower-JCR cores (200) are given higher priorities than higher-JCR cores (200) in increasing the core (200) power budgets, or
wherein the central DVFS controller (102) is further operative to:
sort the plurality of cores (200) according to respective job completion ratios, JCRs, during execution of a job, wherein each JCR is computed based on a first ratio of an accumulated completion score to a total completion score and a second ratio of total expected execution time to actual execution time; and
decrease the core (200) power budgets of a second set of the cores (200) when a multi-core (200) power margin is negative, wherein higher-JCR cores (200) are given higher priorities than lower-JCR cores (200) in decreasing the core (200) power budgets.

13. The system (100) of claim 11, wherein the central DVFS controller (102) is further operative to:
record, in an energy history table, execution time lengths of executing the AI model on an input activation with respective block sizes;
calculate a normalized energy usage for the respective block sizes using the power index and the execution time lengths; and
choose a block size with a lowest normalized energy result for subsequent execution of the AI model.

14. The system (100) of claim 13, wherein the central DVFS controller (102) is further operative to:
reset the energy history table when at least one of the core (200) clock rate and the bus (220) clock rate changes.

15. The system (100) of claim 8, further comprising:
a first converter to convert a maximum temperature reading to a first power value;
a second converter to convert a maximum current reading to a second power value;
a minimum circuit to output a minimum of the first power value and the second power value as a power budget for the plurality of cores (200).
